# EUROPEAN PATENT SPECIFICATION

(11) **EP 0 954 196 B1**
(45) Date of publication and mention of the grant of the patent: **02.11.2006**
(21) Application number: 99400798.7
(22) Date of filing: 01.04.1999
(51) Int. Cl.: H04Q 7/38

(54) **Method for setting up calls in a telecommunications system during traffic congestion**
Verfahren zum Verbindungsaufbau in einem Telekommunikationssystem bei Verkehrsüberlastung
Méthode pour l'établissement d'appels dans un système de télécommunication en cas de congestion de trafic

(30) Priority: 30.04.1998 ES 9800928
(43) Date of publication of application: 03.11.1999
(73) Proprietor: ALCATEL, 75008 Paris (FR)
(72) Inventor: Gonzalez de Prado Diaz, Jose Luis, 28043 Madrid (ES)
(74) Representative: Lamoureux, Bernard

(56) References cited:
- EP-A- 0 304 955
- DE-C- 19 629 899

## Description

### OBJECT OF THE INVENTION

The present invention refers to a method for setting up a communication between a subscriber and a predetermined service during a situation in which all radio resources belonging to a telecommunications system are busy.

More specifically, the method for setting up a communication between a subscriber and an emergency service is of special, but not exclusive, application in a digital cordless telecommunications system (DECT).

### STATE OF THE ART

The patent U.S. 4,839,892 and its family member EP 304 955 describe a telecommunications system formed by a fixed unit and a plurality of remote units connected by means of radio channels, in which said radio channels are being constantly monitored to detect when they are all busy. When this latter state occurs, the system generates a traffic congestion tone.

If simultaneously with the detection of traffic congestion a subscriber requests access to the system, he will hear a congestion tone and will be unable to effect his call.

Nevertheless, if the call that he wishes to make is for an emergency, the subscriber must indicate this to the fixed unit by means of a hook flash; once said hook flash has been received by the fixed station, the latter sends back dial tone, setting up the emergency call over one of the channels reserved for this purpose.

Thus, the telecommunications system permanently reserves some radio channels in order to be able to effect emergency calls in a traffic congestion situation. Consequently, there is a reduction in the number of radio channels available for setting up normal calls.

The permanent reservation of radio channels represents a limitation to the system capacity and is an inconvenience for an operator.

Moreover, the telecommunications system operator cannot vary, depending on the service conditions, the number of simultaneous emergency calls that can be set up in said system.

The document DE 196.29.899 describes a Time Division Duplex (TDD) method between a fixed unit and at least one mobile remote unit, using a Logical Control Channel (LCCH) and at least one Traffic Channel (TCH). In order to increase the channel capacity for conversations which are to be carried out, the Logical Control Channel (LCCH) is interrupted, and a further Traffic Channel (TCH) is set up in a time slot assigned to said Logical Control Channel (LCCH). As soon as one of the Traffic Channels (TCH) is switched off again, the Logical Control Channel (LCCH) is set up once again in the time slot of said Traffic Channel (TCH).

### CHARACTERISATION OF THE INVENTION

The object of this invention is to provide a method according to claim 1 and a fixed unit according to claim 5 to set up a communication between a subscriber and a predetermined service, for example emergency, in a telecommunications system when it simultaneously coincides with a traffic congestion situation in said system.

The telecommunications system comprises at least one fixed unit that intercommunicates with a set of remote units via radio channels making use of a time division duplex system. Consequently, the communication between the fixed unit and the remote units uses a time division multiple access structure in duplex mode.

The fixed unit selects a second time slot from among those available in a frame, without this implying its separation from the traffic. The chosen time slot is made known to the remote units by means of a first time slot, and the remote units shall not transmit power in the signalling field A of the second time slot corresponding to one of the odd frames of the upstream multiframe when this time slot is selected and used for making a call.

If simultaneously with a traffic congestion situation, a first remote unit wishes to set up an emergency call, it transmits a first message in field A of the second time slot reserved for this purpose.

The message is received in the fixed unit, clearing the call set up in the second time slot, and confirming the duplex channel for setting up a communication between the first remote unit and the predetermined service. Next, the fixed unit selects a third time slot as the new candidate for setting up a new emergency call.

### BRIEF DESCRIPTION OF THE FIGURES

A more detailed explanation of the invention is provided in the following description, based on the attached figures, in which:
- figure 1 shows a block diagram of an implementation of a telecommunications system according to the invention,
- figure 2 shows a digital structure of a frame used in a telecommunications system according to the invention, and
- figure 3 shows a traffic channel structure in a frame of the telecommunications system according to the invention.

### DESCRIPTION OF THE INVENTION

In making a description of the present invention, a digital cordless telecommunications system, DECT, will be taken as an example, although it could be applied to any kind of telecommunications system in which the interchange of data between at least one fixed unit 13 and a set of remote units 14-i (where i = 1, ..., n), the latter being within the area of coverage of the fixed unit 13, make use of a time division duplex (TDD) system and sharing the same carrier frequency subdivided, in each transmission direction, in several time slots.

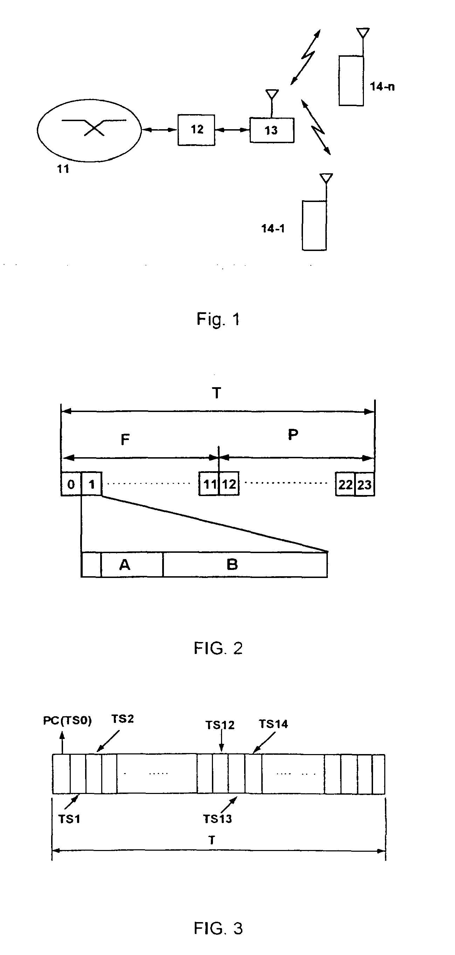

Figure 1 shows in schematic form the telecommunications system of the invention, in which the calls between the fixed unit 13 and the set of remote units 14-1 to 14-n are set up via radio.

The fixed unit 13 is normally connected to a public switched telephone network 11 or to a private telephone network for transmitting the traffic generated at and directed towards the remote units14-1 to 14-n. In the case of the public switched telephone network 11, the fixed unit 13 is connected to a telephone exchange 12 belonging to the telephone network 11.

The fixed unit 13 sends and receives at least one carrier frequency from a set of possible carrier frequencies, setting up a communication with any of the remote units 14-1 to 14-n over a pair of time slots, one in each transmission direction, which share the carrier frequency provided by the fixed unit 13. Consequently, the communication between the two types of unit 13, 14-i employs a time division multiple access structure in duplex mode (TDD).

The fixed unit 13 transmits a set of time slots and subsequently receives an identical number of time slots, these being grouped together in a frame T, shown in figure 2. Each frame is divided into two parts: one for sending, downstream half-frame F towards the remote units 14-1 to 14-n; and the other for receiving, upstream half-frame P towards the fixed unit 13, both being divided into an identical number of time slots. Consequently, the assembly formed by one time slot and one carrier frequency defines a traffic channel.

A communication between a remote unit 14-i and the fixed unit 13 is maintained by means of a pair of time slots, for example TS11, TS23, occupying each one the same position in each half-frame F, P, over one of the carrier frequencies provided by the fixed unit 13. Another communication with another remote unit 14-j, is established over another pair of time slots, it not being necessary to employ the same carrier frequency, it being most probable that another, different frequency will be used.

The frames are grouped for the purpose of signalling and broadcasting into a multiframe comprising consecutive and cyclic emissions, for example, a multiframe consists of 16 frames. The fixed unit 13 sends in a given frame of the multiframe broadcasting information, for example in the frame occupying position 8 of the multiframe.

In order that the remote units 14-i are in an idle-locked state, they must be tuned to a traffic channel which includes, for example, information relative to the carrier frequencies used by the fixed unit 13, its identity and the next frequency the fixed unit 13 will tune to in reception in the following frame, traffic channels occupied, etc. Said traffic channel is known as the dummy channel PC, and is shown in figure 3.

The relevant information of dummy channel PC only occupies a portion of the channel, the rest being free to support a communication, for which reason the dummy channel PC can be read from an active traffic channel.

The rest of the frames in the multiframe contain miscellaneous information relative to the telecommunications system. Thus, for example, in the even frames paging messages are sent, or when these finish, the identity of the fixed unit 13. Element control messages or signalling messages, or both, are sent in the odd frames.

The remote units 14-1 to 14-n, however, transmit, when they are idle-locked, a multiframe with signalling or system access messages only in the even frames of the multiframe and they transmit the identity of the fixed unit 13 as padding signal in the odd frames.

Each traffic channel includes a signalling field A, in which it sends for example paging messages, identity of fixed unit 13, etc.; and a traffic field B in which the useful load, data and/or voice, is sent; as shown in figure 2.

The remote units 14-1 to 14-n receive the broadcast information by means of the dummy channel PC, using it at the moment when, either on the initiative of the subscriber or in response to a warning signal, they start the call set up procedure.

For setting up an outgoing call, for example, a first remote unit 14-1 sends a carrier request message in field A of a free traffic channel, corresponding to a time slot in an upstream frame and over the carrier frequency that corresponds in the sequence, selecting the best traffic channel from among those possible, for example a traffic channel with level below -93 dBm.

The fixed unit 13 confirms the use of the chosen traffic channel for the connection, returning a confirming acknowledgement message to the first remote unit 14-1. Thus, the connection over a pair of time slots is established, both separated by a half-frame, one for sending and one for receiving, and with the chosen carrier frequency; a duplex channel being confirmed. From this moment, the traffic channel is used to set up a call.

In a situation with all traffic channels busy, i.e. a congestion state in the telecommunications system, and when the first remote unit 14-i emits a carrier request, a free traffic channel will not be found, whereby its use cannot be proposed to the fixed unit 13.

Nevertheless, the call can be set up if the called number corresponds to a predetermined service, emergency for example. To this end, the fixed unit 13 selects a second time slot TS1 from among those possible in the downstream half-frame F, as the candidate over which the emergency call will be set up, without this meaning it has to be separated from the traffic.

The fixed unit 13 informs the remote units 14-1 to 14-n that the second time slot TS1 is for emergency calls in the event of traffic congestion, via the broadcast information emitted in the dummy channel PC.

Consequently, the remote units 14-1 to 14-n shall choose this second time slot TS1 on any of the carrier frequencies as the option with lowest priority in the selection process of a traffic channel for setting up a normal call. And, likewise, the remote units 14-1 to 14-n shall not transmit power in the A field of the reserved second time slot TS1 in one of the odd frames of the upstream multiframe when it is selected and used for setting up a normal call, for example in frame 1 normally loaded with the identity of fixed unit 13, as padding, which if not sent does not represent a limitation.

In this way, when a situation of congestion arises in the system and, simultaneously, the first remote unit 14-1 wishes to request the traffic channel reserved for making an emergency call, it will transmit a first message in field A of the second time slot TS1, which is always empty.

The fixed unit 13, on receiving the carrier request in field A, previously in silence, will clear the call set up over it and will transmit a second paging message, with a special call service class, to the first remote unit 14-1.

Once the second message has been received by the first remote unit 14-1, the latter transmits information pertaining to the outgoing call in successive A fields, including in this information the called number which in this case corresponds to the number of an emergency service, for example.

When the called number is received by the fixed unit 13, it is compared with a list of numbers held in a table, for example said table containing numbers of emergency services, which has been previously introduced in the fixed unit 13 by an operator of the telecommunications system.

If the requested number matches with one of those contained in the table, the fixed unit 13 continues with the call processing emitting the outgoing signalling to the telephone network 11, for example.

Thus the communication is set up over the duplex channel reserved for this type of call.

Simultaneously, the fixed unit 13 selects a third time slot TS2 as the new candidate for selection in order to set up a new emergency call in the event of traffic congestion, making this known over the dummy channel PC. There exists the possibility that the new reserved time slot TSj, where j = 0, ..., 11, is being used for a normal call in process.

## Claims

1. Method for setting up calls in a telecommunications system during traffic congestion**,** comprising at least one fixed unit (13) and a set of remote units (14-1, 14-n), which interchange information according to a time division duplex, TDD, mode; wherein said fixed unit (13) selects a first time slot (PC) of those available in a frame (T), in order to transmit broadcast data to said remote units (14-1, 14-n), **characterised in that**
- said fixed unit (13) selects a second time slot (TS1),
- said fixed unit (13) makes this known to said remote units (14-1, 14-n) by means of said first time slot (PC),
- said remote units (14-1, 14-n) do not emit power in a signalling field A of said second time slot (TS1) when said remote units set up calls between said fixed unit (13) and said remote units (14-1, 14-n),
- a first remote unit transmits a first message in the signalling field A of said second time slot (TS1) for setting up a first call for a predetermined service, during traffic congestion

2. Method for setting up calls according to claim 1, **characterised in that** said fixed unit (13) receives said first message, and then clears a call already set up in said second time slot (TS1).

3. Method for setting up calls according to claim 2, **characterised in that** said fixed unit (13) then transmits to said first remote unit (14-1) a second message ; and it that said first remote unit (14-1) receives said second message and then completes said first call over the second time slot (TS1).

4. Method for setting up calls according to claim 3, **characterised in that** :
said fixed unit (13) selects a third time slot (TS2),
- said fixed unit (13) makes this known to said remote units (14-1, 14-n) by means of said third time slot (PC),
- and said remote units (14-1, 14-n) do not emit power in signalling field A of said third time slot (TS2).

5. A fixed unit (13) for setting up calls in a telecommunications system, during traffic congestion, **characterised in that** it comprises means for implementing the corresponding steps associated with the fixed unit (13) according to the method claimed in one of the claims 1-4.

## Patentansprüche

1. Verfahren zum Verbindungsaufbau in einem Telekommunikationssystem bei Verkehrsüberlastung, das mindestens eine feste Einheit (13) und einen Satz von entfernten Einheiten (14-1, 14-n) enthält, die Informationen entsprechend einem Zeitduplex-Modus, TDD, austauschen, wobei die feste Einheit (13) einen ersten Zeitschlitz (PC) aus den in einem Rahmen (T) verfügbaren auswählt, um Rundsende-Daten an die entfernten Einheiten (14-1, 14-n) zu senden, **dadurch gekennzeichnet, dass**:
- die feste Einheit (13) einen zweiten Zeitschlitz (TS1) auswählt,
- die feste Einheit (13) dies den entfernten Einheiten (14-1, 14-n) über den ersten Zeitschlitz (PC) mitteilt,
- die entfernten Einheiten (14-1, 14-n) keine Leistung in einem Signalisierungs-Feld A des zweiten Zeitschlitzes (TS1) aussenden, wenn die entfernten Einheiten (14-1, 14-n) Verbindungen zwischen der festen Einheit (13) und den entfernten Einheiten (14-1, 14-n) aufbauen,
- eine erste entfernte Einheit eine erste Nachricht in dem Signalisierungs-Feld A des zweiten Zeitschlitzes (TS1) sendet, um eine erste Verbindung zu einem bestimmten Dienst während der Verkehrsüberlastung aufzubauen.

2. Verfahren zum Verbindungsaufbau gemäß Anspruch 1, **dadurch gekennzeichnet, dass** die feste Einheit (13) die erste Nachricht empfängt und dann eine bereits in dem zweiten Zeitschlitz (TS1) aufgebaute Verbindung unterbricht.

3. Verfahren zum Verbindungsaufbau gemäß Anspruch 2, **dadurch gekennzeichnet, dass** die feste Einheit (13) dann eine zweite Nachricht an die erste entfernte Einheit (14-1) sendet, und **dadurch**, dass die erste entfernte Einheit (14-1) die zweite Nachricht empfängt und dann den ersten Anruf über den zweiten Zeitschlitz (TS1) ausführt.

4. Verfahren zum Verbindungsaufbau gemäß Anspruch 3, **dadurch gekennzeichnet, dass**:
- die feste Einheit (13) einen dritten Zeitschlitz (TS2) auswählt,
- die feste Einheit (13) diesen den entfernten Einheiten (14-1, 14-n) über den dritten Zeitschlitz (PC) mitteilt,
- und die entfernten Einheiten (14-1, 14-n) keine Leistung im Signalisierungs-Feld A des dritten Zeitschlitzes (TS2) senden.

5. Eine feste Einheit (13) zum Verbindungsaufbau in einem Telekommunikationssystem bei Verkehrsüberlastung, **dadurch gekennzeichnet, dass** sie Mittel enthält, um die entsprechenden Schritte, die mit der festen Einheit (13) verbunden sind, entsprechend dem in einem der Ansprüche 1-4 beanspruchten Verfahren zu implementieren.

## Revendications

1. Procédé d'établissement d'appels dans un système de télécommunications durant un encombrement du trafic, comprenant au moins une unité fixe (13) et un ensemble d'unités distantes (14-1, 14-n), qui échangent des informations selon un mode duplex par répartition dans le temps (TDD) ; dans lequel ladite unité fixe (13) sélectionne une première tranche de temps (PC) parmi celles disponibles dans une trame (T), afin de transmettre des données diffusées auxdites unités distantes (14-1, 14-n), **caractérisé en ce que** :
- ladite unité fixe (13) sélectionne une deuxième tranche de temps (TS1),
- ladite unité fixe (13) communique celle-ci auxdites unités distantes (14-1, 14-n) au moyen de ladite première tranche de temps (PC),
- lesdites unités distantes (14-1, 14-n) n'émettent pas de puissance dans un champ de signalisation A de ladite deuxième tranche de temps (TS1) quand lesdites unités distantes établissent des appels entre ladite unité fixe (13) et lesdites unités distantes (14-1, 14-n),
- une première unité distante transmet un premier message dans le champ de signalisation A de ladite deuxième tranche de temps (TS1) pour établir un premier appel pour un service prédéterminé, durant l'encombrement du trafic.

2. Procédé d'établissement d'appels selon la revendication 1, **caractérisé en ce que** ladite unité fixe (13) reçoit ledit premier message, puis supprime un appel déjà établi dans ladite deuxième tranche de temps (TS1).

3. Procédé d'établissement d'appels selon la revendication 2, **caractérisé en ce que** ladite unité fixe (13) transmet alors à ladite première unité distante (14-1) un deuxième message ; et **en ce que** ladite première unité distante (14-1) reçoit ledit deuxième message, puis fait aboutir ledit premier appel sur la deuxième tranche de temps (TS1).

4. Procédé d'établissement d'appels selon la revendication 3, **caractérisé en ce que** :
- ladite unité fixe (13) sélectionne une troisième tranche de temps (TS2),
- ladite unité fixe (13) communique celle-ci auxdites unités distantes (14-1, 14-n) au moyen de ladite première tranche de temps (PC),
- et lesdites unités distantes (14-1, 14-n) n'émettent pas de puissance dans un champ de signalisation A de ladite troisième tranche de temps (TS2).

5. Unité fixe (13) pour établir des appels dans un système de télécommunications, durant un encombrement du trafic, **caractérisée en ce qu'**elle comprend un moyen pour mettre en oeuvre les étapes correspondantes associées à l'unité fixe (13) conformément au procédé revendiqué dans l'une des revendications 1 à 4.
